# EUROPÄISCHE PATENTSCHRIFT

(11) **EP 4 182 761 B1**
(45) Veröffentlichungstag und Bekanntmachung des Hinweises auf die Patenterteilung: **28.01.2026**
(21) Anmeldenummer: 21745973.4
(22) Anmeldetag: 15.07.2021
(51) Int. Cl.: G05B 19/04, G05B 19/418

(54) **FELDVORRICHTUNG UND VERFAHREN ZUR INTEGRATION EINER FELDVORRICHTUNG**
FIELD DEVICE AND METHOD FOR INTEGRATING A FIELD DEVICE
APPAREIL DE TERRAIN ET PROCÉDÉ D'INTÉGRATION D'UN APPAREIL DE TERRAIN

(30) Priorität: 17.07.2020 BE 202005540
(43) Veröffentlichungstag der Anmeldung: 24.05.2023
(73) Patentinhaber: PHOENIX CONTACT GmbH & Co. KG, 32825 Blomberg (DE)
(72) Erfinder: BLIEFERT, Tim, 30171 Hannover (DE)
(74) Vertreter: LifeTech IP Spies & Behrndt Patentanwälte PartG mbB
(86) Internationale Anmeldenummer: PCT/EP2021/069791
(87) Internationale Veröffentlichungsnummer: WO 2022/013371

(56) Entgegenhaltungen:
- WO-A1-99/19782
- DE-A1- 102011 078 030
- DE-A1- 102017 108 571
- US-A1- 2002 046 263

## Beschreibung

Die Erfindung betrifft eine Feldvorrichtung eines Automatisierungssystems und ein Verfahren zur Integration einer solchen Feldvorrichtung in ein Automatisierungssystem.

Feldvorrichtungen (fachsprachlich auch: Feldgeräte) können Aktoren (beispielsweise Stellglieder oder Ventile) als auch Sensoren (beispielsweise Messumformer) umfassen. In der Fabrik- und Prozessautomation sind die Feldvorrichtungen mit einer Systemsteuerung (fachsprachlich auch: Leitsystem, beispielsweise ein Prozessleitsystem mit einer Prozesssteuerung) über einen Feldbus oder Echtzeit-Ethernet vernetzt. Die Daten eines Sensors können in festgelegten Intervallen erhoben und zur Prozesssteuerung weitergegeben werden.

Die Systemsteuerung wertet die Daten aus zur weiteren Verarbeitung und zur Steuerung oder Regelung der Feldvorrichtungen. Dazu können die Visualisierung und Anzeige eines Ergebnisses der Auswertung gehören, beispielsweise Druck, Durchfluss und Temperatur eines Fluids, und ob ein Ventil geöffnet oder geschlossen ist. Beispielsweise kann die Systemsteuerung auf Basis der Daten Analyse- und Alarmdaten auf Anlagen-Panels anzeigen.

Im Stand der Technik übernimmt ein Prozessleitsystem die Funktion eines Masters, der Sensoren als Slaves abfragt. Der Master steuert den Slave, der über ein Bussystem mit dem Master verbunden ist und mit ihm kommuniziert, und verarbeitet die von dem Slave empfangenen Daten. Dazu erkennt der Master den Slave über das Bussystem, um anschließend automatisch eine Gerätekonfiguration zum Einrichten des Slaves entsprechend seiner Kennungen zu erzeugen, sodass der Slave für den Betrieb im Prozessleitsystem bereit ist. Das Dokument EP 1 594 023 B1 beschreibt ein solches Verfahren zur automatischen Konfiguration des Prozessleitsystems.

Jedoch setzt ein solches herkömmliches Konfigurationsverfahren voraus, dass im Prozessleitsystem bereits Treiber und Konfigurationen zu einer Vielzahl verschiedener Kennungen der Feldvorrichtungen hinterlegt sind. Diese Vorgehensweise kann ineffizient sein angesichts der Vielfalt unterschiedlicher bestehender Prozessleitsysteme in Kombination mit der Vielzahl potentieller Feldvorrichtungen.

Das Patentdokument US 2002/046263 A1 lehrt ein Verfahren zum Konfigurieren eines Automatisierungsmoduls mit einer gespeicherten Konfigurationstabelle.

Eine weitere herkömmliche Vorgehensweise zur Integration einer Feldvorrichtung in ein bestehendes Automatisierungssystem beschafft ein Exemplar der Feldvorrichtung. Anhand des Exemplars kann dann die Entwicklung eines für die Kombination aus Feldvorrichtung und Systemsteuerung spezifischen Treibers begonnen werden, der die Datenkommunikation zwischen Feldvorrichtung und Systemsteuerung ermöglicht. Jedoch kann sich im Zuge der Treiberentwicklung herausstellen, dass die in ihrer Funktion als Aktor oder Sensor korrekt ausgewählte Feldvorrichtung zur Datenkommunikation mit dem Steuersystem des Automatisierungssystems ungeeignet ist, sodass diese Vorgehensweise mit ungewissem Erfolg für eine weitere Feldvorrichtung wiederholt werden muss.

Der Erfindung liegt daher die Aufgabe zu Grunde, eine Feldvorrichtung anzugeben, die zuverlässig und effizient in eine Vielzahl verschiedener Automatisierungssysteme integrierbar ist.

Diese Aufgabe wird mit den Merkmalen der unabhängigen Ansprüche jeweils gelöst. Zweckmäßige Ausgestaltungen und vorteilhafte Weiterbildungen der Erfindung sind in den abhängigen Ansprüchen angegeben.

Ausführungsbeispiele der Erfindung sind im Folgenden unter teilweiser Bezugnahme auf die Figuren beschrieben.

Gemäß einem ersten Aspekt umfasst eine Feldvorrichtung eines Automatisierungssystems mindestens einen Aktor und/oder mindestens einen Sensor (kurz: einen Aktor und/oder Sensor). Ferner umfasst die Feldvorrichtung eine mit dem Aktor und/oder Sensor in Datenverbindung stehende Steuereinheit. Die Steuereinheit ist dazu ausgebildet, Daten des Aktors und/oder Sensors über die Datenverbindung zu erfassen und/oder auszugeben. Ferner umfasst die Feldvorrichtung eine Datenschnittstelle, die dazu ausgebildet ist, Datenpakete zwischen der Steuereinheit und einer Systemsteuerung des Automatisierungssystems auszutauschen. Die Steuereinheit ist ferner dazu ausgebildet, über die Datenschnittstelle gemäß einem Übertragungssteuerungsprotokoll (TCP) eine TCP-Verbindung mit der Systemsteuerung aufzubauen, und über die TCP-Verbindung gemäß einem Hypertext-Übertragungsprotokoll (HTTP) eine Anfrage-Nachricht (REQ-Nachricht) zu den Daten des Aktors und/oder Sensors zu empfangen und eine Antwort-Nachricht (RES-Nachricht) zu den Daten an die Systemsteuerung zu senden.

Ausführungsbeispiele der Feldvorrichtung können in das Automatisierungssystem integrierbar sein mittels der HTTP-gemäßen REQ- und RES-Nachrichten zu den Daten, vorzugsweise ohne die Entwicklung feldvorrichtungsspezifischer Treiber für die Systemsteuerung des Automatisierungssystems und/oder ohne eine feldvorrichtungsspezifische Konfiguration der Systemsteuerung des Automatisierungssystems.

Ausführungsbeispiele der Feldvorrichtung können mittels der HTTP-gemäßen REQ- und RES-Nachrichten ohne die Entwicklung feldvorrichtungsspezifischer Treiber und/oder ohne eine feldvorrichtungsspezifische Konfiguration mit der Systemsteuerung des Automatisierungssystems kommunizieren. Vorzugsweise ist die Steuereinheit der Feldvorrichtung dazu ausgebildet, die Daten in der REQ-Nachricht zu erhalten, über die Datenverbindung an den Aktor auszugeben und in der RES-Nachricht eine Bestätigung der Ausgabe der Daten und/oder eine Rückmeldung einer Betätigung (beispielsweise Bewegung) des Aktors in Reaktion auf die Ausgabe zu senden. Alternativ oder ergänzend ist die Steuereinheit der Feldvorrichtung dazu ausgebildet, in der REQ-Nachricht eine Anweisung zur Erfassen der Daten zu erhalten, die Daten über die Datenverbindung vom Sensor zu erfassen und in der RES-Nachricht die erfassten Daten an das Steuersystem zu senden.

Die Feldvorrichtung, vorzugsweise die Steuereinheit, kann im Rahmen der TCP-Verbindung als Server fungieren. Alternativ oder ergänzend kann die Systemsteuerung im Rahmen der TCP-Verbindung als Client fungieren.

Die Feldvorrichtung kann auch als Feldgerät bezeichnet werden. Die Feldvorrichtung kann eine Industrieelektronik sein.

Die Feldvorrichtung kann zur Integration in einer Fertigungsanlage oder einer Prozessanlage ausgebildet sein. Die Feldvorrichtung kann Aktoren (beispielsweise Stellglieder, Ventile etc.) und/oder Sensoren (beispielsweise Messumformer), vorzugsweise in einer Fertigungs- oder Prozessautomation, umfassen.

Die Steuereinheit kann dazu ausgebildet sein, über die Datenschnittstelle gemäß dem TCP die TCP-Verbindung mit der Systemsteuerung aufzubauen, indem die Steuereinheit dazu ausgebildet ist, über die Datenschnittstelle gemäß dem TCP zum Aufbau der TCP-Verbindung mit der Systemsteuerung ein Synchronisationspaket (SYN-Paket) von der Systemsteuerung zu empfangen und eine Bestätigung (SYN-ACK) des Empfangs des SYN-Pakets an die Systemsteuerung zu senden.

Die mit dem Aktor und/oder Sensor in Datenverbindung stehende Steuereinheit kann dazu ausgebildet sein, die (beispielsweise erfassten oder ausgegeben oder auszugebenden) Daten des Aktors und/oder Sensors zu verarbeiten. Alternativ oder ergänzend kann die Steuereinheit dazu ausgebildet sein, die (beispielsweise erfassten oder ausgegeben oder auszugebenden) Daten des Aktors und/oder Sensors in den Datenpaketen von der Systemsteuerung zu empfangen und/oder in den Datenpaketen an die Systemsteuerung zu senden (d.h. zu übertragen).

Die Datenschnittstelle kann dazu ausgebildet sein, die Daten des Aktors und/oder Sensors zwischen der Steuereinheit und der Systemsteuerung des Automatisierungssystems auszutauschen.

Die Systemsteuerung kann eine Leitstelle des Automatisierungssystems oder ein Prozessleitsystem des Automatisierungssystems sein. Alternativ oder ergänzend kann die Systemsteuerung eine speicherprogrammierbare Steuerung (SPS) und/oder eine Virtuelle Maschine (VM) mit (beispielsweise lokaler) Applikation sein. Die Applikation kann zur Planung und/oder zum Betrieb von energietechnischen Erzeugungseinheiten und/oder Verbrauchseinheiten ausgebildet sein. Die Feldvorrichtung kann Teil einer solchen Erzeugungseinheit oder Verbrauchseinheit sein.

Das Automatisierungssystem kann eine Fertigungsanlage oder eine Prozessanlage sein.

Ausführungsbeispiele der Feldvorrichtung können mit der Steuereinheit als Server, insbesondere als REST-Server, die Daten mit HTTP als Sprache flexibel der Systemsteuerung bereitstellen. Eine Anpassung oder Entwicklung eines Clients für die Systemsteuerung zum Empfangen oder (beispielsweise asynchronen) Aufzeichnen der Daten ist dadurch erleichtert. Alternativ oder ergänzend kann die Steuereinheit über die TCP-Verbindung mittels der Nachrichten gemäß HTTP eine zustandslose (beispielsweise eine "REpresentational State Transfer" oder REST-konforme) Schnittstelle zur Systemsteuerung bereitstellen.

Dieselben oder weitere Ausführungsbeispiele der Feldvorrichtung können eine Anpassung oder Entwicklung eines Clients für die Systemsteuerung zum Empfangen oder (beispielsweise asynchronen) Aufzeichnen der Daten ermöglichen, bevor die Feldvorrichtung in das Automatisierungssystem integriert oder über die Datenschnittstelle mit der Systemsteuerung des Automatisierungssystems verbunden ist, vorzugsweise bevor die Feldvorrichtung für das Automatisierungssystem erworben ist. Beispielsweise kann die Anpassung oder Entwicklung eines Clients für die Systemsteuerung beginnen oder ausgeführt werden, indem auf eine entsprechende Steuereinheit (beispielsweise des Herstellers der Feldvorrichtung) über die TCP-Verbindung zugegriffen wird. Zur Integration der Feldvorrichtung kann dann eine Anpassung einer Internet Protokoll-Adresse (IP-Adresse) der Feldvorrichtung im Client genügen.

Die REQ-Nachricht kann eine Anfrage der Daten umfassen. Die RES-Nachricht kann die angefragten Daten umfassen.

Die REQ-Nachricht kann einen Zeitraum angeben. Die RES-Nachricht kann die in dem angegebenen Zeitraum vom Aktor und/oder Sensor erfassten Daten oder an den Aktor und/oder Sensor ausgegebenen Daten umfassen.

Den Daten können Zeitstempel zugeordnet sein. Die Zeitstempel können jeweils einen Zeitpunkt des Erfassens und/oder des Ausgebens der Daten angeben. Beispielsweise kann die RES-Nachricht die Daten umfassen, denen Zeitstempel im angegebenen Zeitraum zugeordnet sind. Alternativ oder ergänzend kann die RES-Nachricht die den Daten zugeordneten Zeitstempel umfassen.

Beispielsweise können die Daten eine Datenreihe (beispielsweise eine Messreihe) umfassen und die Systemsteuerung kann die Datenreihe aufzeichnen. Nach einem Ausfall der Kommunikation zwischen der Steuereinheit und der Systemsteuerung (beispielsweise einer Unterbrechung des Austauschs der Datenpakete und/oder der TCP-Verbindung) kann mittels des angegebenen Zeitraums gezielt oder mit minimalen Kommunikationsressourcen eine Lücke in der aufgezeichneten Datenreihe aufgefüllt werden.

Die REQ-Nachricht kann einen Klartext angeben. Die RES-Nachricht kann die dem Klartext entsprechenden Daten umfassen.

Die Steuereinheit kann die erfassten und/oder ausgegebene Daten speichern. Die Steuereinheit kann dazu ausgebildet sein, die erfassten oder ausgegebenen oder gespeicherten Daten anhand des von der REQ-Nachricht angegebenen Klartexts zu durchsuchen. Die Daten können dem in der REQ-Nachricht angegebenen Klartext entsprechen, falls den Daten ein Schlüsselbegriff (beispielsweise ein Stichwort) zugeordnet ist, der im Klartext enthalten ist.

Alternativ oder ergänzend können den Daten Klartexte zugeordnet sein, die jeweils die Daten beschreiben. Beispielsweise kann die RES-Nachricht die den Daten zugeordneten Klartexte umfassen.

Die Daten können nicht nur Rohdaten des Aktors und/oder Sensors umfassen, sondern auch eine Beschreibung (beispielsweise die Beschreibung eines Messpunkts). Ausführungsbeispiele der Vorrichtung können der Systemsteuerung ermöglichen, eine Instrumententafel (fachsprachlich auch: "Dashboard" oder Panel) aufgrund der Kommunikation mit der Steuereinheit anzuzeigen.

Die Daten können dazu ausgebildet sein, die Systemsteuerung zur Auswertung und/oder zur Visualisierung und/oder Anzeige der Daten (beispielsweise eines Ergebnisses der Auswertung) zu konfigurieren. Beispielsweise können die Daten Messwerte und eine zugehörige physikalische Einheit zu Anzeige eines Drucks, eines Durchflusses (vorzugsweise einer Durchflussrate) und/oder einer Temperatur eines Fluids umfassen. Alternativ oder ergänzend können die Daten ein Symbol zu Anzeige des Messwerts oder des Betriebszustands (z. B. Ventil geöffnet oder geschlossen) umfassen.

Der von der REQ-Nachricht angegebene Klartext und/oder der den Daten jeweils zugeordnete Klartext kann einen Schlüsselbegriff oder einen Textblock zur Beschreibung der Daten umfassen.

Beispielsweise kann die RES-Nachricht die Daten umfassen, deren Klartexte den in der REQ-Nachricht angegebenen Klartext (beispielsweise vollständig oder mindestens einen Schlüsselbegriff) enthalten. Alternativ oder ergänzend kann die RES-Nachricht die den Daten zugeordneten Klartexte umfassen.

Die Daten können mindestens zwei unterschiedliche Zeitreihen umfassen. Der zugeordnete Klartext kann die jeweilige Zeitreihe angeben. Alternativ oder ergänzend können die Daten mindestens zwei unterschiedliche Messwerte umfassen. Der zugeordnete Klartext kann den jeweiligen Messwert angeben.

Optional kann die RES-Nachricht einen Verweis auf eine vorhergehende RES-Nachricht umfassen, wobei die vorhergehende RES-Nachricht die den Daten zugeordneten Klartexte umfasst. Eine Wiederholung gleicher Klartexte in verschiedenen oder aufeinanderfolgenden RES-Nachrichten kann entfallen, beispielsweise zur effizienteren Nutzung von Kommunikationsressourcen.

Die Feldvorrichtung kann mindestens zwei unterschiedliche mit der Steuereinheit in Datenverbindung stehende Aktoren und/oder Sensoren umfassen. Der den Daten zugeordnete Klartext kann den jeweiligen Aktor oder Sensor angeben, von dem die Daten erfasst und/oder an den die Daten ausgegeben oder auszugeben sind.

Die Feldvorrichtung kann eine Messvorrichtung (auch: Messgerät) sein.

Der von der REQ-Nachricht angegebene Klartext und/oder der den Daten jeweils zugeordnete Klartext kann eine Beschreibung eines Messpunkts umfassen. Alternativ oder ergänzend können die Daten mindestens einen Messwert umfassen und der zugeordnete Klartext kann eine physikalische Einheit des mindestens einen Messwerts angeben. Alternativ oder ergänzend kann der Klartext eine Kennung der Feldvorrichtung und/oder des Aktors und/oder des Sensors umfassen.

Die Daten können vom Sensor erfasste Messwerte umfassen. Alternativ oder ergänzend können die Daten an den Aktor auszugebende Steueranweisungen umfassen. Alternativ oder ergänzend können die Daten vom Aktor und/oder Sensor erfasste und/oder an den Aktor und/oder Sensor ausgegebene Betriebsparameter umfassen. Die Steueranweisungen und/oder die Betriebsparameter können einen Betriebszustand des Aktors und/oder Sensors bestimmen.

Die Daten können ferner Zeitstempel umfassen. Alternativ oder ergänzend können die Zeitstempel jeweils einem der Messwerte und/oder einer der Steueranweisungen und/oder einem der Betriebsparameter zugeordnet sein. Beispielsweise kann der zugeordnete Zeitstempel einen Zeitpunkt des Erfassens der Messwerte und/oder des Ausgebens der Steueranweisungen und/oder des Erfassens und/oder Ausgebens der Betriebsparameter angeben.

Die Messwerte können eine elektrische Spannung und/oder eine Frequenz umfassen.

Die RES-Nachricht kann die Daten in einem HTTP-Dokument umfassen. Alternativ oder ergänzend kann die RES-Nachricht (beispielsweise das HTTP-Dokument) die Daten gemäß einer JavaScript Object Notation (JSON) oder einer Extensible Markup Language (XML) oder als Comma-Separated Value (CSV) umfassen.

Die Daten können in einem Nachrichten-Körper (fachsprachlich auch "Body") der RES-Nachricht enthalten sein. Alternativ oder ergänzend kann ein Kopf (fachsprachlich auch "Head") der RES-Nachricht eine Firmware-Version der Feldvorrichtung, vorzugsweise eine Firmware-Version der von der Steuereinheit ausgeführten Firmware, angeben und/oder den Verweis auf die vorhergehende RES-Nachricht umfassen.

Die REQ-Nachricht und/oder die RES-Nachricht über die TCP-Verbindung können in den Datenpaketen des Internet Protokolls (IP-Datenpaketen oder kurz IP-Paketen) enthalten sein.

Die Steuereinheit kann ein Server der TCP-Verbindung sein. Eine die REQ-Nachricht und die RES-Nachricht umfassende Datenkommunikation der Steuereinheit über die TCP-Verbindung kann von einem Server außerhalb des Automatisierungssystems simulierbar sein.

Die Steuereinheit kann ferner dazu ausgebildet sein, über die Datenschnittstelle eine TCP-Verbindung mit einem Server außerhalb des Automatisierungssystems aufzubauen und über die TCP-Verbindung mit dem Server eine Nachricht gemäß dem HTTP zu empfangen. Die Nachricht von dem Server kann eine Konfiguration der Feldvorrichtung umfassen. Der Server kann dazu ausgebildet sein, die Konfiguration über das Internet (beispielsweise als Web-Dienst) auszuwählen. Der Server kann identisch sein mit oder verschieden sein von einem die Datenkommunikation mit der Steuereinheit simulierenden Server.

Die Steuereinheit kann ferner dazu ausgebildet sein, über die Datenschnittstelle eine TCP-Verbindung mit einem Server außerhalb des Automatisierungssystems aufzubauen und über die TCP-Verbindung mit dem Server eine Nachricht gemäß dem HTTP zu senden. Die Nachricht kann einen Betriebszustand oder einen Fehlerzustand der Feldvorrichtung angeben. Der Server kann identisch sein mit oder verschieden sein von einem die Datenkommunikation mit der Steuereinheit simulierenden Server und/oder einem die Konfiguration der Feldvorrichtung sendenden Server.

Gemäß einem zweiten Aspekt ist ein Verfahren zur Integration einer Feldvorrichtung in ein Automatisierungssystem bereitgestellt. Die Feldvorrichtung kann eine Feldvorrichtung gemäß dem ersten Aspekt sein. Das Verfahren umfasst einen Schritt des Einrichtens (beispielsweise des Anpassens und/oder des Entwickelns und/oder des Testens) einer Anwendungsschnittstelle der Systemsteuerung des Automatisierungssystems zur Kommunikation mit der Datenschnittstelle der Feldvorrichtung. Die Anwendungsschnittstelle ist dazu eingerichtet, die REQ-Nachricht zu senden und die RES-Nachricht zu empfangen in den Datenpaketen über die TCP-Verbindung. Die Datenpakete umfassen ein Adressfeld der Feldvorrichtung oder ein Adressfeld für die Datenschnittstelle der Feldvorrichtung. Beim Einrichten gibt das Adressfeld eine auf einen Server außerhalb des Automatisierungssystems verweisende erste Adresse an. Das Verfahren umfasst ferner einen Schritt des Integrierens der Feldvorrichtung in das Automatisierungssystem durch Verändern des Adressfelds in den Datenpaketen in eine auf die Feldvorrichtung oder die Datenschnittstelle der Feldvorrichtung innerhalb des Automatisierungssystems verweisende zweite Adresse.

Der Server außerhalb des Automatisierungssystems (auch: externer Server) kann eine Instanz oder Kopie der Steuereinheit der Feldvorrichtung umfassen. Im Schritt des Einrichtens kann eine Konfiguration der Systemsteuerung (vorzugsweise der Anwendungsschnittstelle) zur Kommunikation über die TCP-Verbindung mit der Datenschnittstelle der Feldvorrichtung eingerichtet (beispielsweise entwickelt oder angepasst oder getestet) werden, vorzugsweise ohne die Beschaffung eines Exemplars der Feldvorrichtung.

Die Instanz oder Kopie der Steuereinheit der Feldvorrichtung kann auch als digitaler Zwilling der Feldvorrichtung bezeichnet werden. Die Instanz oder Kopie der Steuereinheit der Feldvorrichtung kann über die erste Adresse im Schritt des Einrichtens der Anwendungsschnittstelle zur Kommunikation der REQ- und RES-Nachrichten erreichbar sein.

Die erste Adresse kann eine Netzwerkadresse des externen Servers sein. Alternativ oder ergänzend kann die zweite Adresse eine Netzwerkadresse der im Automatisierungssystem verbauten und/oder angeschlossen Feldvorrichtung sein (beispielsweise die Adresse der Datenschnittstelle der Feldvorrichtung). Die erste Adresse und die zweite Adresse können jeweils IP-Adressen sein, beispielsweise gemäß IPv4 oder IPv6.

Die erste Adresse und die zweite Adresse können voneinander verschieden sein. Die erste Adresse und die zweite Adresse können sich voneinander (vorzugsweise zumindest) in einem Abschnitt des Adressfelds unterscheiden. Der Abschnitt kann verschiedene Subnetze angeben, beispielsweise gemäß einer Subnetzmaske oder einer Präfixlänge des Abschnitts. Das von der ersten Adresse angegebene Subnetz kann einem den externen Server umfassenden Subnetz entsprechen. Das von der zweiten Adresse angegebene Subnetz kann einem das Automatisierungssystem und/oder die Systemsteuerung umfassenden Subnetz entsprechen.

Das Verändern des Adressfelds für die Datenschnittstelle der Feldvorrichtung kann ein Verändern einer Zieladresse im Datenpaket (beispielsweise im Datenpaket der REQ-Nachricht) und/oder einer Absenderadresse im Datenpaket (beispielsweise im Datenpaket der REQ-Nachricht) umfassen.

Gemäß einem dritten Aspekt ist eine Systemsteuerung eines Automatisierungssystems bereitgestellt. Die Systemsteuerung kann dazu ausgebildet sein, das Verfahren gemäß dem zweiten Aspekt auszuführen. Alternativ oder ergänzend kann die Systemsteuerung eine Anwendungsschnittstelle umfassen. Die Anwendungsschnittstelle der Systemsteuerung kann dazu ausgebildet sein, mit der Datenschnittstelle einer Feldvorrichtung gemäß dem ersten Aspekt zu kommunizieren. Alternativ oder ergänzend kann die Anwendungsschnittstelle der Systemsteuerung dazu ausgebildet sein, vorzugsweise in Datenpaketen einer TCP-Verbindung, eine REQ-Nachricht gemäß einem Hypertext-Übertragungsprotokoll (HTTP), vorzugsweise die REQ-Nachricht gemäß dem ersten oder zweiten Aspekt, zu senden und eine RES-Nachricht gemäß dem HTTP, vorzugsweise die RES-Nachricht gemäß dem ersten oder zweiten Aspekt, zu empfangen.

In jedem Aspekt kann ein Adressfeld in den Datenpaketen, beispielsweise für eine Netzwerkadresse der Feldvorrichtung oder die Datenschnittstelle der Feldvorrichtung, wahlweise:
- (vorzugsweise zur Einrichtung der Anwendungsschnittstelle der Systemsteuerung) die erste Adresse angeben oder auf den Server außerhalb des Automatisierungssystems verweisen und
- (vorzugsweise zur Integration der Feldvorrichtung) die zweite Adresse angeben oder auf die Feldvorrichtung innerhalb des Automatisierungssystems verweisen.

Das Verfahren gemäß dem zweiten Aspekt und/oder die Systemsteuerung gemäß dem dritten Aspekt können jeweils einen jeden Schritt und/oder ein jedes Merkmal umfassen, das im Kontext des ersten Aspekts offenbart ist oder einen entsprechen Schritt oder ein entsprechendes Merkmal.

Nachfolgend wird die Erfindung unter Bezugnahme auf die Zeichnungen anhand bevorzugter Ausführungsbeispiele näher erläutert.

Es zeigen:
- Fig. 1: eine schematische Blockdarstellung eines Automatisierungssystems mit Feldvorrichtungen gemäß einem ersten Ausführungsbeispiel;
- Fig. 2: ein schematisches Kommunikationsdiagramm zur Integration einer Feldvorrichtung in ein Automatisierungssystem gemäß einem zweiten Ausführungsbeispiel; und
- Fig. 3: ein schematisches Flussdiagramm eines Verfahrens zur Integration einer Feldvorrichtung in ein Automatisierungssystem.

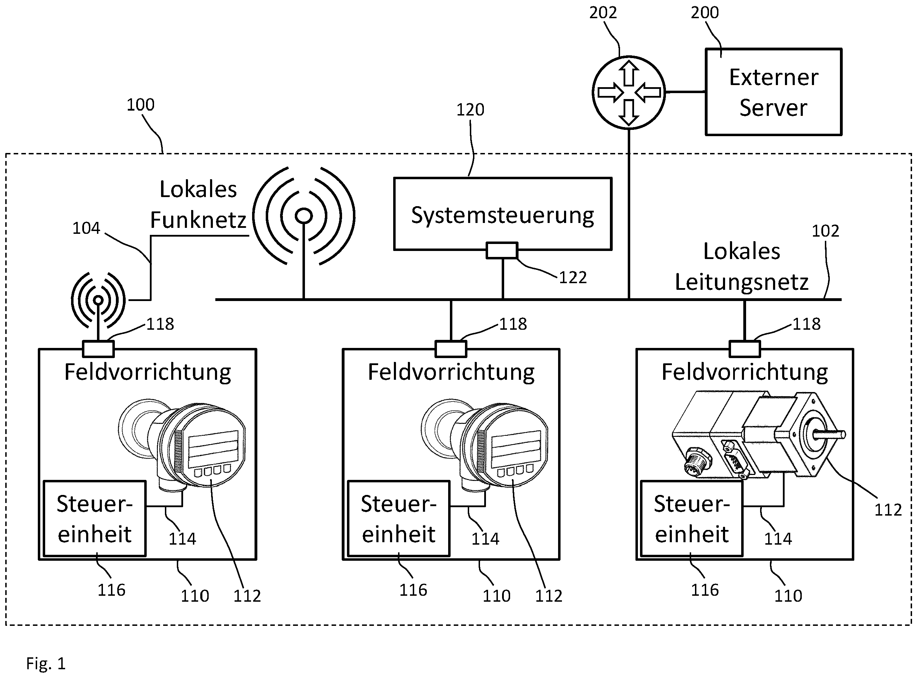

Fig. 1 zeigt schematisch eine Blockdarstellung eines exemplarischen Automatisierungssystems 100 mit ersten Ausführungsbeispielen einer allgemein mit Bezugszeichen 110 bezeichneten Feldvorrichtung. Die Feldvorrichtung 110 kann eine Industrieelektronik, beispielsweise ein Messgerät, sein.

Das Automatisierungssystem 100 umfasst mindestens ein Ausführungsbeispiel der Feldvorrichtung 110, das von einer Systemsteuerung 120 des Automatisierungssystems 100 ausgelesen (beispielsweise überwacht) und/oder gesteuert (beispielsweise geregelt) wird. Während in Fig. 1 eine Systemsteuerung 120 gezeigt ist, können mehrere Systemsteuerungen 120 redundant oder hierarchisch zum Auslesen und/oder Steuern der Feldvorrichtung 110 im Automatisierungssystem 100 ausgebildet sein.

Die in Fig. 1 gezeigten ersten Ausführungsbeispiele der Feldvorrichtung 110 umfassen jeweils einen Aktor 112 und/oder Sensor 112 sowie eine mit dem Aktor 112 und/oder Sensor 112 in Datenverbindung 114 stehende Steuereinheit 116. Die Steuereinheit 116 ist dazu ausgebildet, Daten des Aktors 112 und/oder Sensors 112 über die Datenverbindung 114 zu erfassen und/oder auszugeben. Ferner umfasst die Feldvorrichtung 110 eine Datenschnittstelle 118, die dazu ausgebildet ist, Datenpakete zwischen der Steuereinheit 116 und der Systemsteuerung 120 des Automatisierungssystems 100 auszutauschen.

Die Datenschnittstelle 118 kann eine Netzwerkschnittstelle umfassen. Beispielsweise kann die Datenschnittstelle 118 ausgebildet sein zur Kommunikation über ein lokales Leitungsnetz 102. Das lokale Leitungsnetz 102 kann ein oder mehrere Leiterpaare zur symmetrischen Signalübertragung umfassen. Alternativ oder ergänzend kann das lokale Leitungsnetz 102 mindestens eine Netzwerkweiche (fachsprachlich auch: Switch) umfassen, die verschiedene Zweige der Leiterpaare zum Austauschen der Datenpakete verbindet. Das lokale Leitungsnetz 102 kann ein Ethernet umfassen, vorzugsweise gemäß einer Norm der Normenreihe IEEE 802.3 und/oder ein Echtzeit-Ethernet und/oder ein Single-Pair-Ethernet (SPE).

Alternativ oder ergänzend kann die Datenschnittstelle 118 ausgebildet sein zur Kommunikation über ein lokales Funknetz 104, beispielsweise ein drahtloses lokales Netzwerk (WLAN) gemäß der Wi-Fi-Allianz oder der Normenreihe IEEE 802.11 oder ein zellulares Netzwerk gemäß einer Funkzugangstechnologie des Third Generation Partnership Projects (3GPP), vorzugsweise gemäß der Funkzugangstechnologie der fünften Generation (fachsprachlich auch: Fifth Generation New Radio oder 5G NR). Hierzu kann die Datenschnittstelle 118 kann einen Basisbandchip umfassen, der dazu ausgebildet ist, die Datenpakete mittels eines Protokollstapels zu senden oder zu empfangen gemäß der Funkzugangstechnologie. Beispielsweise kann die Datenschnittstelle 118 zur äußerst zuverlässigen und latenzarmen Kommunikation (fachsprachlich: Ultra-Reliable Low-Latency Communication oder URLLC) gemäß dem Normendokument 3GPP TR 38.824 V16.0.0 und/oder dem Normendokument 3GPP TR 33.825 V16.0.1 ausgebildet sein.

Das Leitungsnetz 102 und/oder das Funknetz 104 können das Subnetz (beispielsweise ein Campusnetz) der Automatisierungsanlage 100 bilden. Die integrierte Feldvorrichtung 110 und die Systemsteuerung 120 sind im selben Subnetz angeschlossen.

Die Steuereinheit 116 ist ferner dazu ausgebildet, über die Datenschnittstelle 118 gemäß einem Übertragungssteuerungsprotokoll (TCP) eine TCP-Verbindung mit der Systemsteuerung 120 aufzubauen und über die TCP-Verbindung gemäß einem Hypertext-Übertragungsprotokoll (HTTP) eine Anfrage-Nachricht (REQ-Nachricht) bezüglich der Daten des Aktors und/oder Sensors zu empfangen und eine Antwort-Nachricht (RES-Nachricht) bezüglich der Daten an die Systemsteuerung 120 zu senden.

In einer ersten Variante jedes Ausführungsbeispiels ist, beispielsweise wie in der Fig. 1 schematisch dargestellt, die Steuereinheit 116 und die Datenschnittstelle 118 außerhalb des Sensors 112 bzw. Aktors 112 angeordnet. In einer zweiten Variante jedes Ausführungsbeispiels ist die Steuereinheit 116 und/oder die Datenschnittstelle 118 in den Sensor 112 und/oder Aktor 112 integriert. In einer dritten Variante jedes Ausführungsbeispiels sind mehrere Sensoren 112 und/oder Aktoren 112 an die Steuereinheit 116 über Datenverbindungen 114 angeschlossen.

Zur Integration der Feldvorrichtung 110 (beispielsweise einer Industrieelektronik) im Automatisierungssystem 100 wird nach dem physischen Einbau der Feldvorrichtung 110 der Austausch (d.h. die Kommunikation) der Daten im Automatisierungssystem 100 eingerichtet. Die Integration kann beispielsweise von einem Entwickler eines Systemintegrators überwacht oder ausgeführt werden.

Eine Inbetriebnahme der Feldvorrichtung 110 kann der Integration der Feldvorrichtung vorausgehen. Die Inbetriebnahme der Feldvorrichtung 110 (z.B. der Industrieelektronik) kann die Bedienung der Feldvorrichtung 110 bis zur fertigen Inbetriebnahme umfassen, beispielsweise bis die Feldvorrichtung 110 physisch eingebaut und/oder angeschlossen ist und/oder bis die Feldvorrichtung 110 eingerichtet ist zur Erfassung der Daten mittels des Sensors 112 und/oder zur Ausgabe der Daten an der Datenschnittstelle 118. Die Feldvorrichtung 110 ist mit der Inbetriebnahme bereit für die Integration in das Automatisierungssystem 100.

Das Automatisierungssystem 100, beispielsweise die Systemsteuerung 120, kann ein der Feldvorrichtung 110 überlagertes System sein. Alternativ oder ergänzend kann die Systemsteuerung 120 eine speicherprogrammierbare Steuerung (SPS) und/oder eine virtuelle Maschine sein. Alternativ oder ergänzend kann die Systemsteuerung 120 eine lokale Anwendung umfassen und/oder ausführen und/oder die Systemsteuerung 120 kann eine Entwicklungsumgebung für eine Anwendungsschnittstelle 122 (beispielsweise eine API) umfassen und/oder ausführen.

In der beanspruchten Ausführungsform ist die Entwicklungsumgebung ein Werkzeug**,** das die Kommunikation mit der Datenschnittstelle 118 oder einer zur Datenschnittstelle 118 funktionsgleichen Datenschnittstelle eines externen Servers 200 testet und/oder das Quellcodeabschnitte (fachsprachlich auch als "Code-Snippets" bezeichnet) zur Kommunikation mit der Datenschnittstelle 118 ausgibt. Die Quellcodeabschnitte können in der lokalen Anwendung der Systemsteuerung 120 verwendbar sein.

Die lokale Anwendung kann eine Steuerung (vorzugsweise eine Regelung) der über die Anwendungsschnittstelle 122 mit der Systemsteuerung 120 vernetzten Feldvorrichtungen 110 umfassen.

In der Phase der Integration der Feldvorrichtung 110 (beispielsweise einer Industrieelektronik) wird die Kommunikation zwischen der Feldvorrichtung 110 (beispielsweise als Server der TCP-Verbindung) und der Systemsteuerung 120 (beispielsweise als Client der TCP-Verbindung) aufgebaut und/oder die Systemsteuerung 120 (beispielsweise die SPS oder die lokale Anwendung) dazu ausgebildet, die Daten zu verarbeiten und/oder die Daten auf Plausibilität zu überprüfen und/oder plausible Daten in eine Datenbank (beispielsweise einer Datenbank des Automatisierungssystems 100 oder eine externe Datenbank außerhalb des Automatisierungssystems 100) zu schreiben.

Herkömmliche Feldvorrichtungen umfassen beispielsweise einen Modbus-Server. Herkömmlicherweise müssen in der Integration die Treiber für die Kommunikation zwischen herkömmlicher Feldvorrichtung und Systemsteuerung entwickelt werden. Dabei schaut der Entwickler in die Dokumentation des Modbus-Servers und sortiert Werte, die für die Anwendung benötigt werden. Danach wird der Treiber in einer Programmierumgebung umgesetzt. Typischerweise wird dazu zunächst ein Exemplar der herkömmlichen Feldvorrichtung als Mustergerät gekauft, dann am Schreibtisch oder im Netzwerk des Automatisierungssystems vor Ort in Betrieb genommen und danach beginnt die Entwicklung des Treibers.

Dagegen umfasst das erste Ausführungsbeispiel der Feldvorrichtung 110 die Steuereinheit 116, welche ohne feldvorrichtungsspezifische Treiber eine TCP-Verbindung mit der Systemsteuerung 120 aufzubauen vermag und gemäß dem HTTP Nachrichten bezüglich der Daten (beispielsweise Anweisungen zu den Daten oder die Daten selbst) auszutauschen vermag.

Beispielsweise kann die RES-Nachricht in sich geschlossen (fachsprachlich auch: "selfcontained") sein. Die RES-Nachricht kann zusätzlich zu den Daten Zusatzinformationen umfassen. Die Zusatzinformation kann die Daten beschreiben (vorzugsweise als Klartext oder Textblock) und/oder eine Konfiguration der Systemsteuerung 120 zur Verarbeitung oder Ausgabe der Daten umfassen.

In jedem Ausführungsbeispiel kann die Systemsteuerung 120 ferner mit einem externen Server 200 außerhalb des Automatisierungssystems 100 vernetzt (d.h. zum Austauschen von Datenpaketen verbunden) sein. Die Attribute "extern" und "außerhalb" können hierbei synonym sein. Der externe Server 200 kann außerhalb des Automatisierungssystems 100 sein, falls zwischen der Systemsteuerung 120 und dem externen Server 200 ein Router 202 angeordnet ist, der die zwischen der Systemsteuerung 120 und dem externen Server 200 ausgetauschten Datenpakete weiterleitet.

Der externe Server 200 kann die gleiche Funktionalität der Steuereinheit 116 bereitstellen, welche die Steuereinheit 116 der Feldvorrichtung 110 über die Datenschnittstelle 118 bereitstellt.

Indem die Funktionalität der Steuereinheit 116 vom externen Server 200 bereitgestellt wird, kann die Integrationsfähigkeit der Feldvorrichtung 110 durch Aufbau einer TCP-Verbindung zwischen der Steuereinheit 116 und dem externen Server 200 und/oder durch Austauschen der Nachrichten gemäß HTTP sichergestellt werden, vorzugsweise vor der Beschaffung eines Exemplars der Feldvorrichtung 110. Alternativ oder ergänzend kann durch das Austauschen der Nachrichten gemäß HTTP die Integration der Feldvorrichtung 110 vorbereitet werden, vorzugsweise vor der Beschaffung eines Exemplars der Feldvorrichtung 110.

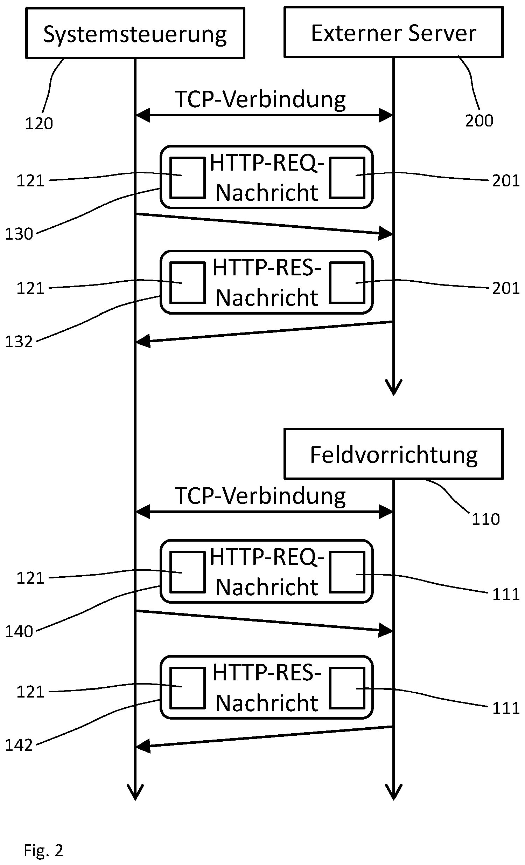

Fig. 2 zeigt schematisch ein Kommunikationsdiagramm zur Integration einer Feldvorrichtung 110 in ein Automatisierungssystem 100 gemäß einem zweiten Ausführungsbeispiel. Während im Folgenden für eine klare und prägnante Beschreibung die Feldvorrichtung 110, die Systemsteuerung 120 und der externe Server 200 jeweils gemäß dem zweiten Ausführungsbeispiel in ihrem Zusammenwirken beschrieben sind, setzt diese Offenbarung nicht ein solches Gesamtsystem voraus. Vielmehr sind die für das Zusammenwirken offenbarten funktionalen Merkmale jeweils für die Feldvorrichtung 110, die Systemsteuerung 120 und den externen Server 200 offenbart.

Ferner können die Feldvorrichtung 110, die Systemsteuerung 120 und der externe Server 200 gemäß dem zweiten Ausführungsbeispiel jeweils eine Weiterbildung der Feldvorrichtung 110, der Systemsteuerung 120 und des externen Servers 200 gemäß dem ersten Ausführungsbeispiel sein.

Die Steuereinheit 116 kann als Server fungieren, beispielsweise bezüglich der TCP-Verbindung und/oder der Nachrichten gemäß HTTP. Aufgrund dieses Merkmals der Feldvorrichtung 110 ermöglicht das zweite Ausführungsbeispiel der Feldvorrichtung 110 einen digitalen Zwilling der Feldvorrichtung 110 außerhalb des Automatisierungssystem bereitzustellen, nämlich mittels eines externen Servers 200.

Der externe Server 200 weist ein Kommunikationsverhalten auf, das dem Kommunikationsverhalten der Feldvorrichtung 110 über die Datenschnittstelle 118 gleicht. Insofern kann der externe Server 200 als digitaler Zwilling der Feldvorrichtung 110 oder der Steuereinheit 116 bezeichnet werden.

Beispielsweise umfasst die Steuereinheit 116 der Feldvorrichtung 110 einen Speicher und mindestens einen Prozessor, der im Speicher der Feldvorrichtung 110 kodierte Befehle ausführt, wobei im Speicher der Feldvorrichtung 110 ein Steuermodul mit den kodierten Befehlen gespeichert ist. Durch Ausführen des Steuermoduls kann die Steuereinheit 116 beispielsweise auf Grundlage der an der Datenschnittstelle 118 empfangenen Datenpakete Daten über die Datenverbindung 114 an den Aktor 112 ausgeben und/oder über die Datenverbindung 114 vom Sensor 112 erfasste Daten in Datenpakete von der Datenschnittstelle 118 aus senden.

Beispielsweise umfasst der externer Server 200 einen Speicher und mindestens einen Prozessor, der im Speicher des externen Servers 200 kodierte Befehle ausführt, wobei im Speicher des externen Servers 200 das gleiche Steuermodul gespeichert ist, das im Speicher der Feldvorrichtung 110 gespeichert ist.

Vorzugsweise ist der externe Server 200 über das Internet verfügbar. Der externe Server 200 ist (beispielsweise aufgrund des Steuermoduls) dazu ausgebildet, mindestens eine Nachricht 130 von der Systemsteuerung 120 zu empfangen (beispielsweise eine REQ-Nachricht 130, die einer späteren REQ-Nachricht 140 an die Feldvorrichtung 110 entspricht). Der externe Server 200 ist ferner (beispielsweise aufgrund des Steuermoduls) dazu ausgebildet, in Reaktion auf die empfangene Nachricht 130 eine Nachricht 132 (beispielsweise eine Antworten, vorzugsweise eine RES-Nachricht 132, die der späteren RES-Nachricht 142 von der Feldvorrichtung 110 entspricht) über das Internet anzubieten, vorzugsweise an die Systemsteuerung 120 zu senden.

Mittels des externen Servers 200 kann eine Anwendungsschnittstelle 122 der Systemsteuerung 120 für die Feldvorrichtung 110 eingerichtet werden, vorzugsweise ohne im Besitz eines Exemplars der Feldvorrichtung 110 zu sein.

Beispielsweise kann ein Entwickler die Systemsteuerung 120 als seinen Client gegen den externen Server 200 (als digitalen Zwilling) im Internet programmieren. Damit kann der Entwickler die Integration der Feldvorrichtung 110 in das Automatisierungssystem 100 vorbereiten oder ausführen, ohne dass ein Mustergerät der Feldvorrichtung 110 (beispielsweise der Industrieelektronik) vor Ort ist.

Alternativ oder ergänzend kann der Entwickler die Bewertung der Feldvorrichtung 110 (beispielsweise der Industrieelektronik) beginnen, ohne dass ein Mustergerät der Feldvorrichtung 110 vor Ort ist.

Jede der REQ- und RES-Nachrichten gemäß **HTTP** kann (vorzugsweise jeweils) in einem Datenpaket (beispielsweise einem IP-Datenpaket) enthalten sein. Das jeweilige Datenpaket umfasst ein Adressfeld für eine Absenderadresse (fachsprachlich auch: "source address") und ein Adressfeld für eine Zieladresse (fachsprachlich auch: "destination address").

Beispielsweise kann das Adressfeld der Absenderadresse der REQ-Nachricht 130 auf die Systemsteuerung 120 verweisen, d.h. die Adresse 121 der Systemsteuerung 120 umfassen. Das Adressfeld der Zieladresse der REQ-Nachricht 130 kann auf den externen Server 200 verweisen, d.h. die Adresse 201 des externen Servers 200 (auch: die erste Adresse) umfassen.

Beispielsweise kann das Adressfeld der Zieladresse der RES-Nachricht 132 auf die Systemsteuerung 120 verweisen, d.h. die Adresse 121 der Systemsteuerung 120 umfassen. Das Adressfeld der Absenderadresse der RES-Nachricht 132 kann auf den externen Server 200 verweisen, d.h. die Adresse 201 des externen Servers 200 (auch: die erste Adresse) umfassen.

Mittels des externen Servers 200 ist ein Bewertungsprozess über die Integration oder die Integrationstauglichkeit der Feldvorrichtung 110 (z.B. ein Prototypen-Bewertungsprozess) gegenüber der herkömmlichen Beschaffung eines Musterexemplars vereinfacht, zeitlich verkürzt und mit weniger Risiken verbunden.

Nach der Einrichtung der Anwendungsschnittstelle 122 der Systemsteuerung 120 mittels des externen Servers 200 muss nur noch die erste Adresse ersetzt werden durch die Adresse der Feldvorrichtung 110, um die Feldvorrichtung 110 in das Automatisierungssystem 100 zu integrieren.

Beispielsweise kann das Adressfeld der Absenderadresse der REQ-Nachricht 140 auf die Systemsteuerung 120 verweisen, d.h. die Adresse 121 der Systemsteuerung 120 umfassen. Das Adressfeld der Zieladresse der REQ-Nachricht 140 kann auf die Feldvorrichtung 110 verweisen, d.h. die Adresse 111 der Feldvorrichtung 110 (auch: die zweite Adresse) umfassen.

Beispielsweise kann das Adressfeld der Zieladresse der RES-Nachricht 142 auf die Systemsteuerung 120 verweisen, d.h. die Adresse 121 der Systemsteuerung 120 umfassen. Das Adressfeld der Absenderadresse der RES-Nachricht 142 kann auf die Feldvorrichtung 110 verweisen, d.h. die Adresse 111 der Feldvorrichtung 110 (auch: die zweite Adresse) umfassen.

Somit kann nach erfolgter Einrichtung der Systemsteuerung 120 mittels des externen Servers 200 die Integration im Wesentlichen ein Austauschen der ersten Adresse durch die zweite Adresse umfassen.

Die Datenpakete sind vorzugsweise gemäß dem Internet-Protokoll (IP) aufgebaut (d.h. sogenannte IP-Datenpakete). Die Adressen sind vorzugsweise IP-Adressen.

Das in Fig. 2 anhand des Kommunikationsdiagramms gezeigte zweite Ausführungsbeispiel kann einen Web-Service des externen Servers 200 zur Systemintegration ohne Muster der Feldvorrichtung 110 umfassen.

Beispielsweise kann das sowohl von der Steuereinheit 116 der Feldvorrichtung 110 als auch vom externen Server 200 ausgeführte Steuermodul die Funktion eines REST-Server für die Feldvorrichtung 110 (beispielsweise ein komplexes Messgerät) umfassen.

Alternativ oder ergänzend kann das von der Steuereinheit 116 der Feldvorrichtung 110 ausgeführte Steuermodul die Funktion eines REST-Server für die Feldvorrichtung 110 (beispielsweise für ein komplexes Messgerät) umfassen. Auf Basis des Steuermoduls oder des REST-Servers der Feldvorrichtung 110 kann ein REST-Server 200 im Internet entwickelt werden, der technisch exakt die gleichen Antworten liefert, wie der REST-Server der Feldvorrichtung 110. Damit liegt ein virtuelles oder digitalisiertes Abbild der Feldvorrichtung 110 hinsichtlich der Kommunikation über die Datenschnittstelle 118 vor.

Im Schritt des Einrichtens der Systemsteuerung 120 (vorzugweise der Anwendungsschnittstelle 122) kann der Entwickler dann einen Client entwickeln, der in Kommunikation mit dem REST-Server 200 im Internet funktioniert.

Im Schritt der Integration der Feldvorrichtung wird (beispielsweise durch Verändern eines Netzwerk-Parameters des Clients) die erste Adresse in die zweite Adresse abgeändert. Damit ist die Integration 304 der Feldvorrichtung 110 gegenüber der herkömmlichen Vorgehensweise erheblich beschleunigt.

Die technische Lösung für die Integration der Feldvorrichtung 110 in das Automatisierungssystem 100 (kurz: Systemintegration), beispielsweise die Datenschnittstelle 118 zum Austausch von HTTP-Nachrichten über eine TCP-Verbindung kann ferner zur Konfiguration der Feldvorrichtung 110 angewandt werden. Die Feldvorrichtung 110 (beispielsweise einen Industrieelektronik) wird konfiguriert, indem der Nutzer durch einen web-basierten Service des externen Servers 200 (oder eines anderen externen Servers) im Internet geführt wird, der zu seiner individuellen Konfiguration der Feldvorrichtung 110 führt. Die Führung über Web-Services führt zu einem erhöhten Komfort und zu einer zeitlichen Verkürzung der Konfiguration der Feldvorrichtung 110.

Alternativ oder ergänzend kann die technische Lösung für die Systemintegration, beispielsweise die Datenschnittstelle 118 zum Austausch von HTTP-Nachrichten über eine TCP-Verbindung, ferner zur Unterstützung und/oder Überwachung und/oder Fernwartung der Feldvorrichtung 110 angewandt werden. Beispielsweise kann die Steuereinheit 116 dazu ausgebildet sein, einen Betriebszustand der Feldvorrichtung 110 an den externen Server 200 (vorzugsweise periodisch oder ausgelöst durch ein Fehlerereignis) zu senden. Alternativ oder ergänzend kann die Feldvorrichtung (z.B. eine Industrieelektronik) unterstützt werden, indem der Nutzer durch einen web-basierten Service des externen Servers 200 (oder eines anderen externen Servers) im Internet geführt wird, der z.B. zu einer Erstdiagnose führt. Die Führung über den Web-Service führt zu einer erhöhten Zufriedenheit bei der Behandlung im Aftersales-Service oder kann den Fehlerzustand früher beheben, um eine Ausfallzeit der Automatisierungsanlage 100 zu vermeiden oder zu verkürzen.

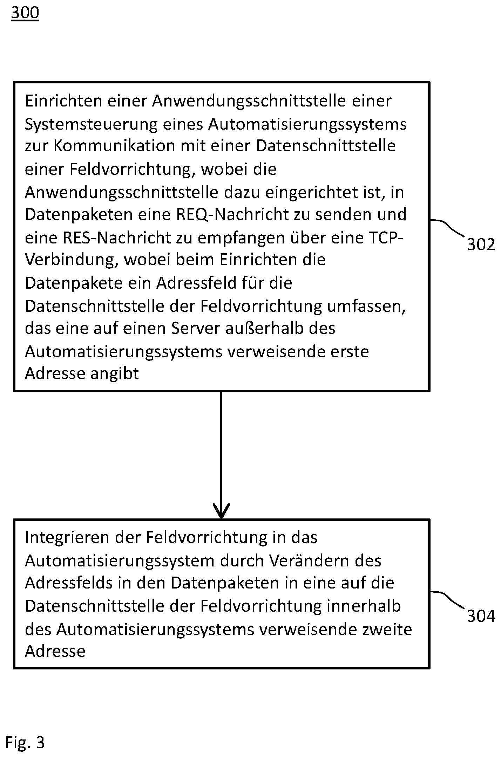

Fig. 3 zeigt ein schematisches Flussdiagramm eines Verfahrens 300 zur Integration einer Feldvorrichtung 110 in ein Automatisierungssystem 100 gemäß einem dritten Ausführungsbeispiel. Die dabei integrierte oder zu integrierende Feldvorrichtung 110 kann gemäß dem ersten und/oder dem zweiten Ausführungsbeispiel ausgebildet sein.

In einem Schritt 302 wird eine Anwendungsschnittstelle 122 der Systemsteuerung 120 des Automatisierungssystems 100 zur Kommunikation mit der Datenschnittstelle 118 der Feldvorrichtung 110 eingerichtet. Die Anwendungsschnittstelle 122 wird dazu eingerichtet, in den Datenpaketen die REQ-Nachricht zu senden und die RES-Nachricht zu empfangen über die TCP-Verbindung, wobei beim Einrichten 302 die Datenpakete ein Adressfeld für die Datenschnittstelle der Feldvorrichtung 110 umfassen, das eine auf einen Server 200 außerhalb des Automatisierungssystems 100 verweisende erste Adresse 201 angibt. Das Verfahren 300 umfasst ferner einen Schritt 304 des Integrierens der Feldvorrichtung 110 in das Automatisierungssystem 100 durch Verändern des Adressfelds in den Datenpaketen in eine auf die Datenschnittstelle der Feldvorrichtung 110 innerhalb des Automatisierungssystems 100 verweisende zweite Adresse 111.

Wie anhand vorstehender Ausführungsbeispiele ersichtlich wurde, können Ausführungsbeispiele der Feldvorrichtung 110 und des Verfahrens 300 ermöglichen, bereits vor der Beschaffung eines Exemplars der Feldvorrichtung 110, die Kommunikation mit der Systemsteuerung 120 einzurichten oder zu verifizieren, indem die Systemsteuerung 120 zunächst mit dem externen Server 200 kommuniziert. Diese Kommunikation der Systemsteuerung 120 mit dem externen Server 200 kann im Wesentlichen (beispielsweise bis auf die Adresse 111 im Adressfeld für die Feldvorrichtung 110) gleich oder ununterscheidbar sein von oder äquivalent sein zu der späteren Kommunikation der Systemsteuerung 120 mit der Feldvorrichtung 110. Die Integration der Feldvorrichtung 110 kann im Wesentlichen die Anpassung der Adresse im Adressfeld der Datenpakete umfassen von der Adresse 201 des externen Servers 200 zu der Adresse 111 der Feldvorrichtung 110 im Automatisierungssystem 100.

Dadurch ist es einem Nutzer der Systemsteuerung 120, beispielsweise einem Entwickler der lokalen Anwendung ermöglicht zu beurteilen, ob und/oder wie die Feldvorrichtung 110 in das Automatisierungssystem 100 integrierbar ist. Beispielsweise tritt der Nutzer dadurch in der Rolle eine Empfehlers oder Beraters auf, der die Entscheidung über die Beschaffung der Feldvorrichtung 110 vorbereitet oder unterstützt, bevor ein erstes Exemplar der Feldvorrichtung 110 beschafft wird. Dadurch können im Vergleich zur herkömmlichen Vorgehensweise Zeit und Ressourcen, beispielsweise beim Transport und ggf. einem Rücktransport eines Musterexemplars, vermieden werden.

Der Entwickler kann beispielsweise eine Bewertung darüber abgeben, ob die Feldvorrichtung für die Integration tauglich ist und/oder später gekauft und/oder in Serie eingesetzt werden soll.

Indem die Steuereinheit 116 eines Ausführungsbeispiels der Feldvorrichtung 110 zur Kommunikation gemäß HTTP über die TCP-Verbindung ausgebildet ist, kann eine (vorzugsweise spätere) Datenkommunikation zwischen der Systemsteuerung 120 und der Feldvorrichtung 110 durch eine äquivalente Datenkommunikation zwischen der Systemsteuerung 120 und dem externen Server 200 eingerichtet (beispielsweise reproduziert, angepasst, entwickelt oder verifiziert) werden. Bei der Datenkommunikation mit dem externen Server 200 kann ein Aufbauen der TCP-Verbindung und/oder ein Senden der REQ-Nachricht und/oder ein Empfangen der RES-Nachricht aus Sicht der Systemsteuerung 120 äquivalent ablaufen oder ausgeführt werden, wie bei der Datenkommunikation mit der im Automatisierungssystem 100 integrierten Feldvorrichtung 110, beispielsweise auch wenn die TCP-Verbindung der Datenkommunikation mit dem externen Server 200 über einen Router 202 aus dem Subnetz des Automatisierungssystems heraus führt. Damit können die Ausführungsbeispiele der Feldvorrichtung 110 oder das Verfahren 300 zur Integration der Feldvorrichtung 110 einem Nutzer (beispielsweise dem Entwickler) die Vorbereitung der Entscheidung über die Integration und/oder das Ausführen der Integration der Feldvorrichtung 110 erheblich vereinfachen.

Obwohl die Erfindung in Bezug auf exemplarische Ausführungsbeispiele beschrieben worden ist, ist für Fachkundige ersichtlich, dass verschiedene Änderungen vorgenommen werden können und Äquivalente als Ersatz verwendet werden können. Ferner können viele Modifikationen vorgenommen werden, um eine bestimmte Situation oder einen bestimmten Sensor oder einen bestimmten Aktor an die Lehre der Erfindung anzupassen. Folglich ist die Erfindung nicht auf die offenbarten Ausführungsbeispiele beschränkt, sondern umfasst alle Ausführungsbeispiele, die in den Bereich der beigefügten Patentansprüche fallen.

**Bezugszeichenliste**

| | |
|---|---|
| Automatisierungssystem | 100 |
| Lokales Leitungsnetzwerk, vorzugsweise 4-paariges Ethernet oder 1-paariges Ethernet (SPE) | 102 |
| Lokales Funknetzwerk, vorzugsweise gemäß der fünften Mobilfunkgeneration | 104 |
| Feldvorrichtung, auch Feldgerät (FG), vorzugsweise Industrieelektronik oder Messgerät | 110 |
| Netzwerkadresse, vorzugsweise IP-Adresse, der Feldvorrichtung | 111 |
| Aktor und/oder Sensor der Feldvorrichtung | 112 |
| Datenverbindung zwischen Steuereinheit und Aktor und/oder Sensor | 114 |
| Steuereinheit der Feldvorrichtung | 116 |
| Datenschnittstelle zwischen Feldvorrichtung und Systemsteuerung | 118 |
| Systemsteuerung des Automatisierungssystems | 120 |
| Netzwerkadresse, vorzugsweise IP-Adresse, der Systemsteuerung | 121 |
| Anwendungsschnittstelle der Systemsteuerung | 122 |
| REQ-Nachricht beim Einrichten | 130 |
| RES-Nachricht beim Einrichten | 132 |
| REQ-Nachricht nach dem Integrieren | 140 |
| RES-Nachricht nach dem Integrieren | 142 |
| Externer Server außerhalb des Automatisierungssystems | 200 |
| Netzwerkadresse, vorzugsweise IP-Adresse, des externen Servers | 201 |
| Gateway-Router zwischen Automatisierungssystem und externem Server | 202 |
| Verfahren zur Integration einer Feldvorrichtung | 300 |
| Schritt des Einrichtens einer Anwendungsschnittstelle | 302 |
| Schritt des Integrierens der Feldvorrichtung | 304 |

## Patentansprüche

1. Verfahren (300) zur Integration einer Feldvorrichtung (110) in ein Automatisierungssystem (100), umfassend:
- Einrichten (302) einer Anwendungsschnittstelle (122) einer Systemsteuerung (120) des Automatisierungssystems (100) zur Kommunikation mit einer Datenschnittstelle (118) der Feldvorrichtung (110), wobei die Anwendungsschnittstelle (122) dazu eingerichtet ist, in Datenpaketen eine Anfrage-Nachricht, REQ-Nachricht (130, 140), zu senden und eine Antwort-Nachricht, RES-Nachricht (130, 140), zu empfangen über eine TCP-Verbindung, wobei beim Einrichten (302) die Datenpakete ein Adressfeld für die Datenschnittstelle (118) der Feldvorrichtung (110) umfassen, das eine auf einen Server (200) außerhalb des Automatisierungssystems (100) verweisende erste Adresse (201) angibt, wobei das Einrichten (302) ein Testen der Kommunikation mit einer zur Datenschnittstelle (118) funktionsgleichen Datenschnittstelle des externen Servers (200) umfasst; und
- Integrieren (304) der Feldvorrichtung (110) in das Automatisierungssystem (100) durch Verändern des Adressfelds in den Datenpaketen in eine auf die Datenschnittstelle (118) der Feldvorrichtung (110) innerhalb des Automatisierungssystems (100) verweisende zweite Adresse (111), wobei durch Verändern eines Netzwerk-Parameters eines Clients der Systemsteuerung (120) die erste Adresse (201) in die zweite Adresse (111) abgeändert wird.

2. Verfahren (300) nach Anspruch 1, ferner umfassend:
- Bereitstellen der Feldvorrichtung (110) des Automatisierungssystems (100), umfassend
einen Aktor (112) und/oder Sensor (112),
eine mit dem Aktor (112) und/oder Sensor (112) in Datenverbindung (114) stehende Steuereinheit (116), die dazu ausgebildet ist, Daten des Aktors (112) und/oder Sensors (112) über die Datenverbindung (114) zu erfassen und/oder auszugeben, und
die Datenschnittstelle (118), die dazu ausgebildet ist, Datenpakete zwischen der Steuereinheit (116) und der Systemsteuerung (120) des Automatisierungssystems (100) auszutauschen,
wobei die Steuereinheit (116) ferner dazu ausgebildet ist,
∘ über die Datenschnittstelle (118) gemäß einem Übertragungssteuerungsprotokoll, TCP, die TCP-Verbindung mit der Systemsteuerung (120) aufzubauen, und
∘ über die TCP-Verbindung gemäß einem Hypertext-Übertragungsprotokoll, HTTP, die Anfrage-Nachricht, REQ-Nachricht, zu den Daten des Aktors (112) und/oder Sensors (112) zu empfangen und die Antwort-Nachricht, RES-Nachricht, zu den Daten an die Systemsteuerung (120) zu senden.

3. Verfahren (300) nach Anspruch 1 oder 2, wobei die REQ-Nachricht eine Anfrage der Daten umfasst und die RES-Nachricht die angefragten Daten umfasst.

4. Verfahren (300) nach einem der Ansprüche 1 bis 3, wobei die REQ-Nachricht einen Zeitraum angibt und die RES-Nachricht die in dem angegebenen Zeitraum vom Aktor (112) und/oder Sensor (112) erfassten Daten oder an den Aktor (112) und/oder Sensor (112) ausgegebenen Daten umfasst.

5. Verfahren (300) nach einem der Ansprüche 1 bis 4, wobei den Daten Zeitstempel zugeordnet sind, die jeweils einen Zeitpunkt des Erfassens und/oder des Ausgebens der Daten angeben.

6. Verfahren (300) nach einem der Ansprüche 1 bis 5, wobei die REQ-Nachricht einen Klartext angibt und die RES-Nachricht die dem Klartext entsprechenden Daten umfasst.

7. Verfahren (300) nach Anspruch 6,
wobei den Daten Klartexte zugeordnet sind, die jeweils die Daten beschreiben, vorzugsweise wobei die RES-Nachricht die den Daten zugeordneten Klartexte umfasst; und/oder
wobei die Feldvorrichtung (110) mindestens zwei unterschiedliche mit der Steuereinheit (116) in Datenverbindung stehende Aktoren (112) und/oder Sensoren (112) umfasst, und der den Daten zugeordnete Klartext den jeweiligen Aktor (112) oder Sensor (112) angibt, von dem die Daten erfasst und/oder an den die Daten ausgegeben oder auszugeben sind.

8. Verfahren (300) nach Anspruch 6 oder 7, wobei der von der REQ-Nachricht angegebene Klartext und/oder der den Daten jeweils zugeordnete Klartext eine Beschreibung eines Messpunkts umfasst, und/oder wobei die Daten mindestens einen Messwert umfassen und der zugeordnete Klartext eine physikalische Einheit des mindestens einen Messwerts angibt, und/oder wobei der Klartext eine Kennung der Feldvorrichtung (110) und/oder des Aktors (112) und/oder des Sensors (112) umfasst.

9. Verfahren (300) nach einem der Ansprüche 1 bis 8, wobei die Daten umfassen:
- vom Sensor (112) erfasste Messwerte; und/oder
- an den Aktor (112) auszugebende Steueranweisungen; und/oder
- vom Aktor (112) und/oder Sensor (112) erfasste und/oder an den Aktor (112) und/oder Sensor (112) ausgegebene Betriebsparameter, die einen Betriebszustand des Aktors (112) und/oder Sensors (112) bestimmen.

10. Verfahren (300) nach einem der Ansprüche 1 bis 9, wobei die RES-Nachricht die Daten in einem HTTP-Dokument umfasst, vorzugsweise gemäß einer JavaScript Object Notation, JSON, oder einer Extensible Markup Language, XML, oder als Comma-Separated Value (CSV).

11. Verfahren (300) nach einem der Ansprüche 1 bis 10, wobei die REQ-Nachricht und die RES-Nachricht über die TCP-Verbindung in den Datenpaketen des Internet Protokolls, IP-Paketen, enthalten sind.

12. Verfahren (300) nach einem der Ansprüche 2 bis 11, wobei die Steuereinheit (116) ein Server der TCP-Verbindung ist, und wobei eine die REQ-Nachricht und die RES-Nachricht umfassende Datenkommunikation der Steuereinheit (116) über die TCP-Verbindung von dem Server (200) außerhalb des Automatisierungssystems (100) simulierbar ist.

13. Verfahren (300) nach einem der Ansprüche 2 bis 12, wobei die Steuereinheit (116) ferner dazu ausgebildet ist, über die Datenschnittstelle (118) eine TCP-Verbindung mit dem Server (200) außerhalb des Automatisierungssystems (100) aufzubauen und über die TCP-Verbindung mit dem Server (200) eine Nachricht gemäß dem HTTP zu empfangen, wobei die Nachricht von dem Server (200) eine Konfiguration der Feldvorrichtung (110) umfasst.

14. Verfahren (300) nach einem der Ansprüche 2 bis 13, wobei die Steuereinheit (116) ferner dazu ausgebildet ist, über die Datenschnittstelle (118) eine TCP-Verbindung mit dem Server (200) außerhalb des Automatisierungssystems (100) aufzubauen und über die TCP-Verbindung mit dem Server (200) eine Nachricht gemäß dem HTTP zu senden, wobei die Nachricht einen Betriebszustand oder einen Fehlerzustand der Feldvorrichtung (110) angibt.

15. Eine Systemsteuerung (120) eines Automatisierungssystems (100), wobei die Systemsteuerung (120) dazu ausgebildet ist, das Verfahren (300) gemäß einem der Ansprüche 1 bis 14 auszuführen.

## Claims

1. A method (300) for integrating a field device (110) into an automation system (100), comprising:
- configuring (302) an application interface (122) of a system controller (120) of the automation system (100) to communicate with a data interface (118) of the field device (110), wherein the application interface (122) is configured to send, in data packets, a request message, REQ message (130, 140), and to receive a response message, RES message (132, 142), over a TCP connection, wherein during configuration (302) the data packets comprise an address field for the data interface (118) of the field device (110) that indicates a first address (201) pointing to a server (200) outside of the automation system (100), wherein configuring (302) comprises testing the communication with a data interface of the external server (200) that is functionally identical to the data interface (118); and
- integrating (304) the field device (110) into the automation system (100) by changing the address field in the data packets into a second address (111) pointing to the data interface (118) of the field device (110) within the automation system (100), wherein by changing a network parameter of the client of the system controller (120) the first address (201) is changed into the second address (111).

2. The method (300) of claim 1, further comprising:
- providing the field device (110) of the automation system (100), comprising
an actuator (112) and/or sensor (112),
a control unit (116) that is in data communication (114) with the actuator (112) and/or sensor (112), which is configured to acquire data of the actuator (112) and/or sensor (112) over the data connection (114) and/or to output data, and
**the data** interface (118), which is configured to exchange data packets between the control unit (116) and the system controller (120) of the automation system (100),
wherein the control unit (116) is further configured to,
∘ establish, over the data interface (118) according to a Transmission Control Protocol, TCP, the TCP connection with the system controller (120), and
∘ over the TCP connection according to a Hypertext Transfer Protocol, HTTP, receive the request message, REQ message, relating to the data of the actuator (112) and/or sensor (112) and send the response message, RES message, relating to the data to the system controller (120).

3. The method (300) of claim 1 or 2, wherein the REQ message comprises a request of the data and the RES message comprises the requested data.

4. The method (300) of any of claims 1 to 3, wherein the REQ message indicates a time period and the RES message comprises the data acquired by the actuator (112) and/or sensor (112) in the indicated time period or the data output to the actuator (112) and/or sensor (112).

5. The method (300) of any of claims 1 to 4, wherein timestamps are associated with the data, which each indicate a point in time of acquiring and/or of outputting the data.

6. The method (300) of any of claims 1 to 5, wherein the REQ message specifies a plain text and the RES message comprises the data corresponding to the plain text.

7. The method (300) of one of claim 6, wherein plain texts are associated with the data, which each describe the data, preferably wherein the RES message comprises the plain texts associated with the data; and/or wherein the field device (110) comprises at least two different actuators (112) and/or sensors (112) being in data communication with the control unit (116), and the plain text associated with the data indicates the respective actuator (112) or sensor (112) from which the data are acquired and/or to which the data are output or are to be output.

8. The method (300) of any of claims 6 to 7, wherein the plain text specified by the REQ message and/or the plain text respectively associated with the data comprises a description of a measurement point, and/or wherein the data comprise at least one measured value and the associated plain text indicates a physical unit of the at least one measured value, and/or wherein the plain text comprises an identifier of the field device (110) and/or of the actuator (112) and/or of the sensor (112).

9. The method (300) of any of claims 1 to 8, wherein the data comprises:
- measured values acquired by the sensor (112); and/or
- control instructions to be output to the actuator (112); and/or
- operating parameters acquired by the actuator (112) and/or sensor (112) and/or output to the actuator (112) and/or sensor (112), which determine an operating state of the actuator (112) and/or sensor (112).

10. The method (300) of any of claims 1 to 9, wherein the RES message comprises the data in an HTTP document, preferably according to a JavaScript Object Notation, JSON, or an Extensible Markup Language, XML, or as comma-separated value (CSV).

11. The method (300) of any of claims 1 to 10, wherein the REQ message and the RES message are contained in the data packets of the Internet Protocol, IP packets, over the TCP connection.

12. The method (300) of any of claims 2 to 11, wherein the control unit (116) is a server of the TCP connection, and wherein a data communication comprising the REQ message and the RES message of the control unit (116) over the TCP connection is simulatable by the server (200) outside of the automation system (100).

13. The method (300) of any of claims 2 to 12, wherein the control unit (116) is further configured to establish, over the data interface (118), a TCP connection with the server (200) outside of the automation system (100) and to receive, over the TCP connection with the server (200), a message according to **HTTP,** wherein the message from the server (200) comprises a configuration of the field device (110).

14. The method (300) of any of claims 2 to 13, wherein the control unit (116) is further configured to establish, over the data interface (118), a TCP connection with the server (200) outside of the automation system (100) and to send, over the TCP connection with the server (200), a message according to **HTTP,** wherein the message indicates an operating state or an error state of the field device (110).

15. A system controller (120) of an automation system (100), wherein the system controller (120) is configured to carry out the method (300) according to any of claims 1 to 15.

## Revendications

1. Procédé (300) d'intégration d'un dispositif de terrain (110) dans un système d'automatisation (100), comprenant :
- configurer (302) une interface applicative (122) d'un contrôleur du système (120) du système d'automatisation (100) pour communiquer avec une interface de données (118) du dispositif de terrain (110), dans lequel l'interface applicative (122) est configurée pour émettre, dans des paquets de données, un message de requête, message REQ (130, 140), et pour recevoir un message de réponse, message RES (132, 142), sur une connexion TCP, dans lequel lors de la configuration (302) les paquets de données comprennent un champ d'adresse pour l'interface de données (118) du dispositif de terrain (110) qui indique une première adresse (201) pointant vers un serveur (200) à l'extérieur du système d'automatisation (100), dans lequel configurer (302) comprend tester la communication avec une interface de données du serveur externe (200) fonctionnellement identique à l'interface de données (118) ; et
- intégrer (304) le dispositif de terrain (110) dans le système d'automatisation (100) en changeant le champ d'adresse dans les paquets de données en une deuxième adresse (111) pointant vers l'interface de données (118) du dispositif de terrain (110) à l'intérieur du système d'automatisation (100), dans lequel, en changeant un paramètre réseau du client du contrôleur du système (120), la première adresse (201) est changée en la deuxième adresse (111).

2. Procédé (300) selon la revendication 1, comprenant en outre:
- fournir le dispositif de terrain (110) du système d'automatisation (100), comprenant
un actionneur (112) et/ou capteur (112),
une unité de commande (116) étant en communication de données (114) avec l'actionneur (112) et/ou le capteur (112), qui est configurée pour acquérir des données de l'actionneur (112) et/ou du capteur (112) via la liaison de données (114) et/ou pour émettre des données, et
sl'interface de données (118), qui est configurée pour échanger des paquets de données entre l'unité de commande (116) et le contrôleur du système (120) du système d'automatisation (100),
dans lequel l'unité de commande (116) est en outre configurée pour,
∘ établir, via l'interface de données (118) selon un protocole de contrôle de transmission, TCP, la connexion TCP avec le contrôleur du système (120), et
∘ sur la connexion TCP selon un protocole de transfert hypertexte, HTTP, recevoir le message de requête, message REQ, relatif aux données de l'actionneur (112) et/ou du capteur (112) et envoyer le message de réponse, message RES, relatif aux données au contrôleur du système (120).

3. Procédé (300) selon la revendication 1 ou 2, dans lequel le message REQ comprend une requête des données et le message RES comprend les données demandées.

4. Procédé (300) selon l'une quelconque des revendications 1 à 3, dans lequel le message REQ indique une période de temps et le message RES comprend les données acquises par l'actionneur (112) et/ou le capteur (112) dans la période indiquée ou les données émises vers l'actionneur (112) et/ou le capteur (112).

5. Procédé (300) selon l'une quelconque des revendications 1 à 4, dans lequel des horodatages sont associés aux données, qui indiquent chacun un instant de l'acquisition et/ou de l'émission des données.

6. Procédé (300) selon l'une quelconque des revendications 1 à 5, dans lequel le message REQ indique un texte en clair et le message RES comprend les données correspondant au texte en clair.

7. Procédé (300) selon l'une des revendications 6, dans lequel des textes en clair sont associés aux données, qui décrivent chacun les données, de préférence dans lequel le message RES comprend les textes en clair associés aux données ; et/ou dans lequel le dispositif de terrain (110) comprend au moins deux différents actionneurs (112) et/ou capteurs (112) étant en communication de données avec l'unité de commande (116), et le texte en clair associé aux données indique l'actionneur (112) ou le capteur (112) respectif à partir duquel les données sont acquises et/ou vers lequel les données sont émises ou doivent être émises.

8. Procédé (300) selon l'une quelconque des revendications 6 à 7, dans lequel le texte en clair indiqué par le message REQ et/ou le texte en clair respectivement associé aux données comprend une description d'un point de mesure, et/ou dans lequel les données comprennent au moins une valeur mesurée et le texte en clair associé indique une unité physique d'au moins une valeur mesurée, et/ou dans lequel le texte en clair comprend un identifiant du dispositif de terrain (110) et/ou de l'actionneur (112) et/ou du capteur (112).

9. Procédé (300) selon l'une quelconque des revendications 1 à 8, dans lequel les données comprennent:
- des valeurs mesurées acquises par le capteur (112) ; et/ou
- des instructions de commande à émettre vers l'actionneur (112) ; et/ou
- des paramètres de fonctionnement acquis par l'actionneur (112) et/ou le capteur (112) et/ou émis vers l'actionneur (112) et/ou le capteur (112), qui déterminent un état de fonctionnement de l'actionneur (112) et/ou du capteur (112).

10. Procédé (300) selon l'une quelconque des revendications 1 à 9, dans lequel le message RES comprend les données dans un document HTTP, de préférence selon une JavaScript Object Notation, JSON, ou une Extensible Markup Language, XML, ou sous forme de valeurs séparées par des virgules (CSV).

11. Procédé (300) selon l'une quelconque des revendications 1 à 10, dans lequel le message REQ et le message RES sont contenus, sur la connexion TCP, dans les paquets IP du protocole Internet.

12. Procédé (300) selon l'une quelconque des revendications 2 à 11, dans lequel l'unité de commande (116) est un serveur de la connexion TCP, et dans lequel une communication de données comprenant le message REQ et le message RES de l'unité de commande (116) sur la connexion TCP est simulable par le serveur (200) à l'extérieur du système d'automatisation (100).

13. Procédé (300) selon l'une quelconque des revendications 2 à 12, dans lequel l'unité de commande (116) est en outre configurée pour établir, via l'interface de données (118), une connexion TCP avec le serveur (200) à l'extérieur du système d'automatisation (100) et pour recevoir, sur la connexion TCP avec le serveur (200), un message selon HTTP, dans lequel le message du serveur (200) comprend une configuration du dispositif de terrain (110).

14. Procédé (300) selon l'une quelconque des revendications 2 à 13, dans lequel l'unité de commande (116) est en outre configurée pour établir, via l'interface de données (118), une connexion TCP avec le serveur (200) à l'extérieur du système d'automatisation (100) et pour envoyer, sur la connexion TCP avec le serveur (200), un message selon HTTP, dans lequel le message indique un état de fonctionnement ou un état d'erreur du dispositif de terrain (110).

15. Un contrôleur du système (120) d'un système d'automatisation (100), dans lequel le contrôleur du système (120) est configuré pour mettre en œuvre le procédé (300) selon l'une quelconque des revendications 1 à 14.
